# DEMANDE DE BREVET EUROPEEN

(11) **EP 0 857 650 A1**
(43) Date de publication de la demande: **12.08.1998**
(21) Numéro de dépôt: 98400254.3
(22) Date de dépôt: 05.02.1998
(51) Int. Cl.: B64G 1/50

(54) **Satellite géostationnaire stabilisé trois axes à contrôle thermique perfectionné**

(30) Priorité: 10.02.1997 FR 9701471
(71) Demandeur: Aerospatiale Société Nationale Industrielle, 75008 Paris (FR)
(72) Inventeur: Cassagne, Jean-Christophe, 06210 Mandelieu (FR); Moschetti, Bernard, 06550 La Roquette Sur Siagne (FR); Lebleu, Denis, 06580 Pegomas (FR); Courteau, Pascal, 06110 Le Cannet (FR)
(74) Mandataire: Bonnetat, Christian

(57) **Abrégé**

- La présente invention concerne un satellite géostationnaire stabilisé sur son orbite selon trois de ses axes et comportant au moins une première face (8) et au moins une seconde face (9), telles qu'une première face est éclairée par le soleil lorsqu'une seconde face se trouve à l'ombre et inversement.
- Selon la présente invention, le satellite comporte des moyens de couplage thermique (15, 16) entre au moins une première face (8) et au moins une seconde face (9).
- Contrôle thermique des satellites, notamment de télécommunications.

## Description

La présente invention concerne des satellites géostationnaires stabilisés trois axes et, plus particulièrement, le contrôle thermique desdits satellites.

On sait que les équipements électroniques embarqués à bord des satellites dissipent de l'énergie sous forme thermique. Pour maintenir lesdits équipements dans une plage de température optimale de fonctionnement, il est donc nécessaire d'évacuer, à l'extérieur du satellite, l'énergie thermique excédentaire. On sait de plus qu'une telle évacuation d'énergie thermique ne peut être obtenue que par rayonnement vers l'espace.

Dans le cas d'un satellite géostationnaire stabilisé trois axes sur son orbite, notamment un satellite de télécommunications, comportant une face nord et une face sud, opposées l'une à l'autre et respectivement orthogonales à l'axe des pôles de la Terre, il est usuel que le rayonnement de la chaleur du satellite vers l'espace s'effectue par lesdites faces nord et sud, utilisées en radiateur thermique. Un tel processus d'évacuation de chaleur est avantageux, car lesdites faces nord et sud :
- subissent, sur une période annuelle, un ensoleillement minimal par rapport aux autres faces du satellite ; et
- ont une illumination constante sur une journée, c'est-à-dire sur une révolution, ce qui permet d'éviter des variations de température trop importantes.

Cependant, en cas de dissipation d'énergie thermique très importante par lesdits équipements électroniques, il peut arriver que l'évacuation de chaleur par les faces nord et sud soit insuffisante pour assurer auxdits équipements une température de fonctionnement optimale.

L'objet de la présente invention est donc d'accroître les possibilités d'évacuation de chaleur à bord d'un satellite, pour éviter cet inconvénient.

A cette fin, selon l'invention, le satellite géostationnaire stabilisé sur son orbite selon trois de ses axes et comportant au moins une première face et au moins une seconde face, telles qu'une première face est éclairée par le soleil lorsqu'une seconde face se trouve à l'ombre et inversement, est remarquable en ce qu'il comporte des moyens de couplage thermique entre au moins une première face et au moins une seconde face.

Ainsi, selon l'invention, on considère globalement l'ensemble d'au moins une première face et d'au moins une seconde face pour un contrôle thermique additionnel du satellite, en transférant la puissance thermique excédentaire depuis le côté ensoleillé du satellite (qui a une capacité de rejet thermique minimale vers l'extérieur) vers le côté à l'ombre, qui dispose d'un potentiel élevé d'évacuation de chaleur vers l'extérieur. On augmente ainsi la capacité globale de rejet thermique du satellite et donc la puissance à radiofréquence de celui-ci.

Dans un mode de réalisation avantageux, afin de faciliter l'évacuation, vers l'extérieur du satellite, de la chaleur engendrée par des dispositifs rayonnants (équipements électroniques) montés à bord dudit satellite, ces dispositifs rayonnants sont au moins en partie portés par lesdites première(s) et seconde(s) faces et lesdits moyens de couplage thermique assurent le transfert de chaleur entre lesdits dispositifs portés par au moins une première face et lesdits dispositifs portés par au moins une seconde face. Ainsi, la chaleur engendrée par des dispositifs rayonnants portés par une face éclairée par le soleil (et donc peu ou pas thermiquement dissipatrice) est transmise du côté à l'ombre du satellite où elle peut plus facilement être dissipée vers l'extérieur.

De telles première(s) et seconde(s) faces peuvent être constituées par une face est et une face ouest, opposées l'une à l'autre et respectivement transversales à ladite orbite. De même, des première(s) et seconde(s) faces peuvent être constituées par une face terre, constamment dirigée vers la Terre et une face anti-terre constamment dirigée à l'opposé de la Terre, lesdites faces terre et anti-terre étant respectivement orthogonales au plan de l'équateur.

Lesdits moyens de couplage thermique peuvent être constitués par tout dispositif susceptible de conduire la chaleur. Cependant, de préférence, de tels moyens de couplage sont des conduits de chaleur (appelés généralement caloducs ou boucles fluides) contenant un fluide évaporable et condensable subissant alternativement des passages de la phase liquide à la phase vapeur puis de la phase vapeur à la phase liquide.

Notamment dans le cas d'un satellite pour télécommunications, lesdits dispositifs rayonnant de la chaleur peuvent être des tubes à ondes progressives, généralement désignés par les dénominations TOP ou TWT (Travelling Wave Tube), notamment ceux dits à collecteur rayonnant permettant des puissances de transmission importantes. De tels tubes à ondes progressives disposent d'un collecteur fonctionnant à une température très élevée, de l'ordre de 200°C par rapport au corps du tube qui reste à une température de l'ordre de 80°C. Dans ce cas, il est avantageux que les corps desdits tubes à ondes progressives soient fixés sur des première(s) et seconde(s) faces du satellite et que leurs collecteurs soient disposés à l'extérieur dudit satellite, au moins du côté de l'une des faces nord ou sud de ce dernier.

Les figures du dessin annexé feront bien comprendre comment l'invention peut être réalisée. Sur ces figures, des références identiques désignent des éléments semblables.

La figure 1 illustre schématiquement un satellite conforme à la présente invention sur son orbite géostationnaire.

La figure 2 illustre, en perspective, un mode de réalisation de l'invention.

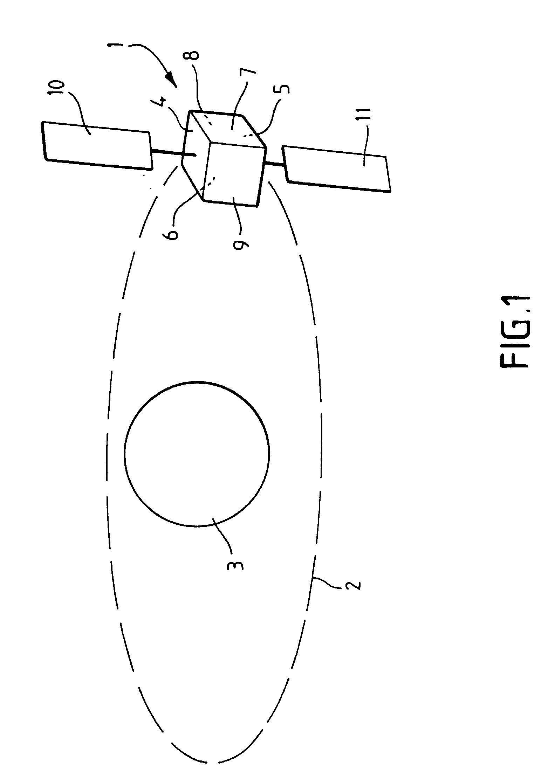

Sur la figure 1, on a représenté un satellite géostationnaire 1 stabilisé sur son orbite 2 autour de la Terre 3 selon trois de ses axes. Ce satellite 1 présente une forme parallélépipédique comportant une face nord 4 et une face sud 5 perpendiculaires à l'axe de pôles de la Terre, ainsi qu'une face terre 6, une face anti-terre 7, une face est 8 et une face ouest 9, ces quatre dernières faces 6 à 9 étant orthogonales au plan de l'équateur.

Les faces terre 6 et anti-terre 7 sont respectivement, en permanence, dirigées vers la Terre et à l'opposé de la Terre. Les faces est 8 et ouest 9 sont transversales à l'orbite 2.

Des panneaux photovoltaïques 10 et 11 sont prévus pour alimenter le satellite 1 en énergie électrique.

En règle générale, le contrôle thermique d'un satellite, tel que le satellite 1, est obtenu en utilisant les seuls panneaux nord et sud 4 et 5 comme radiateurs, comme cela a été expliqué ci-dessus, ces panneaux étant ou non couplés.

Conformément à la présente invention, dans le satellite 1, on peut utiliser également les faces 6 à 9.

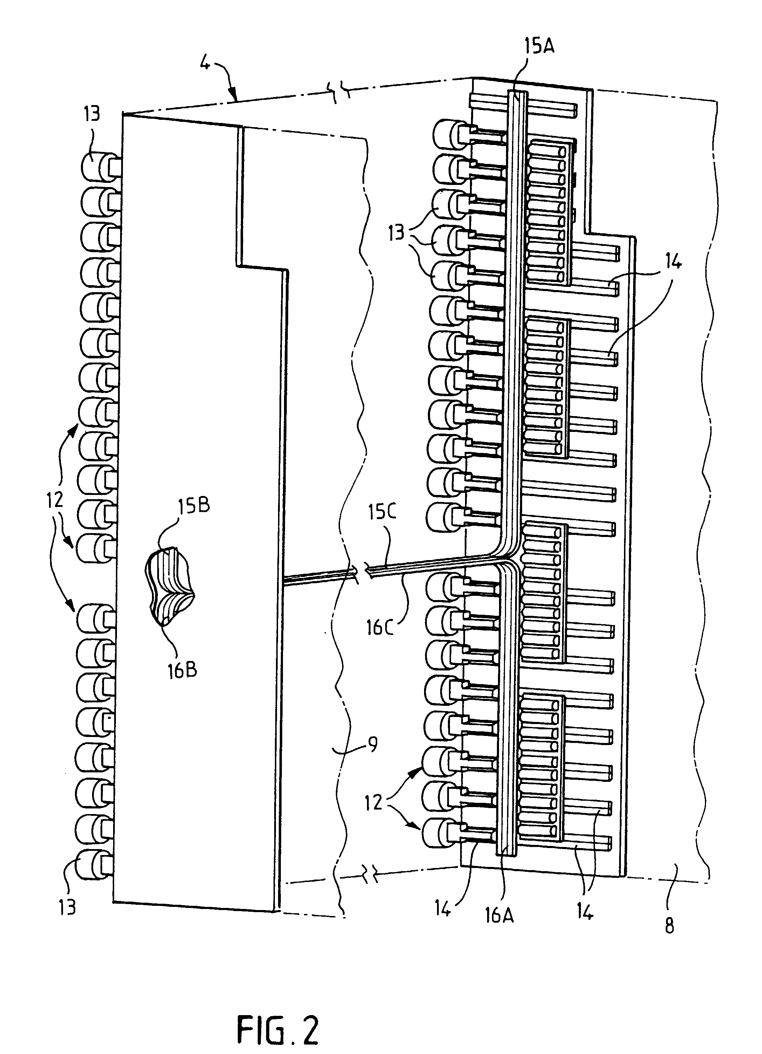

Comme le montre la figure 2, le satellite 1 enferme des dispositifs 12 rayonnant de la chaleur, par exemple des tubes à ondes progressives.

Dans le mode de réalisation particulier de la figure 2, ces tubes à ondes progressives 12 sont montés de façon que leurs collecteurs rayonnants 13 fassent saillie par rapport à la face nord 4, tandis que leurs corps 14 sont respectivement portés par les faces est et ouest 8 et 9. Par ailleurs, les corps 14 des tubes à ondes progressives portés par la face est 8 sont couplés thermiquement aux corps 14 des tubes à ondes progressives 12 portés par la face ouest 9, au moyen de conduits de chaleur 15 et 16. Ces conduits de chaleur sont du type caloducs ou boucles fluides et enferment un fluide évaporable et condensable subissant alternativement des passages de la phase liquide à la phase vapeur et inversement.

Chacun des conduits de chaleur 15 et 16 comporte, dans l'exemple représenté, une branche 15A ou 16A en contact avec les corps 14 portés par la face est 8, une branche 15B ou 16B en contact avec les corps 14 portés par la face ouest 9 et une partie médiane 15C ou 16C reliant lesdites branches 15A et 15B ou 16A et 16B.

Une disposition analogue des dispositifs rayonnants 12 peut être prévue du côté de la face sud 5.

Ainsi, on réalise un couplage thermique entre les faces est 8 et ouest 9.

De ce qui précède, on comprendra aisément que, selon l'invention, on pourrait également coupler thermiquement :
- les faces terre 6 et anti-terre 7 ;
- les faces est 8 et ouest 9, ainsi que les faces terre 6 et anti-terre 7 ;
- la face est 8 simultanément à la face ouest 9 et à la face terre 6, etc ...,
de tels couplages thermiques ayant pour objet de transférer en permanence de la puissance thermique excédentaire depuis le côté ensoleillé vers le côté à l'ombre du satellite 1.

Par la mise en oeuvre de la présente invention, on augmente donc la capacité d'évacuation de chaleur du satellite, sans accroître les dimensions de ce dernier.

## Revendications

1. Satellite géostationnaire (1) stabilisé sur son orbite (2) selon trois de ses axes et comportant des moyens de couplage thermique (15, 16) entre au moins une première et au moins une seconde de ses faces,
caractérisé en ce que lesdites première (6, 8) et seconde (7, 9) faces sont telles qu'une première face est éclairée par le soleil lorsqu'une seconde face se trouve à l'ombre et inversement.

2. Satellite géostationnaire (1) selon la revendication 1,
caractérisé en ce que des première et seconde faces sont constituées par une face est (8) et par une face ouest (9), opposées l'une à l'autre et respectivement transversales à ladite orbite (2).

3. Satellite géostationnaire (1) selon l'une des revendications 1 ou 2,
caractérisé en ce que des première et seconde faces sont constituées par une face terre (6), constamment dirigée vers la Terre, et une face anti-terre (7), constamment dirigée à l'opposé de la Terre, lesdites faces terre et anti-terre étant respectivement orthogonales au plan de l'équateur.

4. Satellite géostationnaire (1) selon l'une des revendications 1 à 3,
caractérisé en ce que lesdites première(s) et seconde(s) faces (6 à 9) portent des dispositifs (12) rayonnant de la chaleur et en ce que lesdits moyens de couplage thermique (15, 16) assurent le transfert de chaleur entre lesdits dispositifs portés par au moins une première face et lesdits dispositifs portés par au moins une seconde face.

5. Satellite géostationnaire (1) selon l'une des revendications 1 à 4,
caractérisé en ce que lesdits moyens de couplage (15, 16) sont des conduits de chaleur contenant un fluide évaporable et condensable subissant alternativement des passages de la phase liquide à la phase vapeur, puis de la phase vapeur à la phase liquide.

6. Satellite géostationnaire (1) selon l'une des revendications 4 ou 5,
caractérisé en ce que lesdits dispositifs (12) rayonnant de la chaleur sont des tubes à ondes progressives.

7. Satellite géostationnaire (1) selon la revendication 6, comportant une face nord et une face sud, opposées l'une à l'autre et orthogonales à l'axe des pôles de la Terre (3),
caractérisé en ce que les corps (14) desdits tubes à ondes progressives sont fixés sur des première(s) et seconde(s) faces (8, 9) et en ce que les collecteurs (13) desdits tubes à ondes progressives sont disposés à l'extérieur dudit satellite (1), au moins du côté de l'une desdites faces nord et sud (4, 5).
